# NEUE EUROPÄISCHE PATENTSCHRIFT

(11) **EP 0 327 827 B2**
(45) Veröffentlichungstag und Bekanntmachung des Hinweises auf die Entscheidung über den Einspruch: **11.06.1997**
(45) Hinweis auf die Patenterteilung: 01.04.1992
(21) Anmeldenummer: 89100573.8
(22) Anmeldetag: 13.01.1989
(51) Int. Cl.: F16L 21/00, E04D 13/08, F16L 3/10

(54) **Stumpfgeschweisstes Metallrohr mit Muffe, insbesondere Regenfallrohr**
Welded metal pipe with a socket, particularly a rainwater downpipe
Tuyau métallique soudé comportant un emboîtement, en particulier tuyau de gouttière

(30) Priorität: 10.02.1988 DE 8801684 U
(43) Veröffentlichungstag der Anmeldung: 16.08.1989
(73) Patentinhaber: KM Europa Metal Aktiengesellschaft, D-49023 Osnabrück (DE)
(72) Erfinder: Clausing, Dieter, Dipl.-Ing., D-4500 Osnabrück (DE)

(56) Entgegenhaltungen:
- EP-A- 0 008 935
- CH-A- 626 147
- FR-A- 1 553 956
- Klett-Steffen, "Grosses Handbuch für Installateure, Heizungsbauer und Klempner", 7. Auflage, 1960 (auszugsweise)
- Herbert Schlenker, "Die Fachkunde der Bauklempnerei", 1976, ISBN Nr. 3872471384 (auszugsweise)
- DIN 18461, Seiten 1 und 6

## Beschreibung

Die Erfindung betrifft ein Regenfallrohr aus einem durch Biegen bzw. Rollformen eines dünnen Metallstreifens aus Kupfer oder einer niedriglegierten Kupferlegierung mit anschließendem Stumpfschweißen der Längskanten des umgeformten Metallstreifens hergestellten zylindrischen Metallrohr, das an einem Ende eine zylindrische Muffe zur Aufnahme des Endabschnitts eines weiteren Metallrohrs besitzt und dessen Außendurchmesser im wesentlichen dem Innendurchmesser der Muffe entspricht.

Stumpfgeschweißte Metallrohre werden bekanntermaßen durch Biegen bzw. Rollformen eines dünnen Metallstreifens hergestellt, wobei anschließend die Stoßfugen dicht miteinander verschweißt werden. Im Nahtbereich weisen diese Metallrohre praktisch die gleiche Wanddicke auf wie im übrigen Bereich. Derart stumpfgeschweißte dünnwandige Metallrohre mit genormten Rohrdurchmessern größer als 60 mm beispielsweise aus Kupfer- oder niedriglegierten Zinkblechen, verwendet der Klempner vorzugsweise im Bereich der Dachentwässerung als Regenfallrohre, da sie gegenüber Witterungseinflüssen weniger anfällig sind als gefalzte oder verlötete Metallrohre.

Die üblicherweise nur eine begrenzte Länge aufweisenden zylindrischen Regenfallrohre werden zur Überbrückung größerer Entfernungen, z. B. von einem Stutzen an einer Dachrinne bis zum Anschluß an eine Kanalentwässerung, über Muffenenden verbunden. Zur Befestigung der Regenfallrohre an der Hauswand dienen Rohrschellen.

Gemäß *Schlenker* "Die Fachkunde der Bauklempnerei" A.W. Gentner Verlag, Stuttgart (1976), ISBN-Nr. 3872471384 zählen Zinkrohre zum Stand der Technik, die an den Längsnähten gelötet oder gefalzt sind. Dazu müssen sich die Nahtkanten überlappen. Jedes Regenfallrohr besitzt ein weites oberes und ein enges unteres Ende. Das obere Ende ist außerdem noch in eine Steckweite und eine Schiebweite unterteilt. Die Steckweite dient mit ihrem satten Sitz zur Herstellung einer unlösbaren Verbindung. Die Schiebeweite soll ein leichtes Zusammenfügen der Baulängen zu lösbaren Verbindungen ermöglichen. Hierbei soll die Umfangslänge der Schiebeweite mindestens 2 mm länger sein als die der Steckweite. Damit solche Regenfallrohre nicht abrutschen können, sind über den Rohrschellen Wulste, Halbwulste oder Nasen angelötet oder angenietet. Auch kräftig durchgedrückte Sicken sollen den gleichen Zweck erfüllen.

Darüber hinaus zählt es durch *Klett-Steffen* "Großes Handbuch für Installateure, Heizungsbauer und Klempner" 7. Auflage, Fachbuchverlag Dr. Pfanneberg & Co., Gießen, 1960 zum Stand der Technik, bei zwei ineinandergeschobenen Regenfallrohren mit sichtbaren gelöteten oder gefalzten Längsnähten am unteren engen Ende des oberen Rohrs eine umfangsseitige Sicke vorzusehen. Die Sicke stüzt sich dann auf einer Rohrschelle ab, die wiederum mit der Stirnseite des unteren Rohrs kontaktiert.

Ferner beschreibt die FR-A-15 53 956 ein spezielles Einlaufrohr aus Metall zur Verbindung einer Dachrinne mit einem Regenfallrohr. Dieses Einlaufrohr weist wenigstens zwei Auswölbungen auf, deren axialer Abstand voneinander gleich der Breite einer entsprechenden Befestigungsschelle ist.

Der Erfindung liegt ausgehend vom eingangs genannten Stand der Technik die Aufgabe zugrunde, ein Regenfallrohr aus einem stumpf geschweißten zylindrischen Metallrohr aus Kupfer oder einer Kupferlegierung mit an einem Ende ausgeformter Muffe bereitzustellen, das dem Handwerker auf der Baustelle vorbereitet zur Verfügung gestellt und unter Berücksichtigung einer ansprechenden Optik rutschsicher über Befestigungsschellen an der Hauswand fixiert werden kann.

Die Lösung dieser Aufgabe besteht erfindungsgemäß bei einem
Regenfallrohr aus einem durch Biegen bzw. Rollformen eines dünnen Metallstreifens aus Kupfer oder einer niedriglegierten Kupferlegierung mit anschließendem Stumpfschweißen der Längskanten des umgeformten Metallstreifens hergestellten zylindrischen Metallrohr, das an einem Ende eine zylindrische Muffe zur Aufnahme des Endabschnitts eines weiteren Metallrohrs besitzt und dessen Außendurchmesser im wesentlichen dem Innendurchmesser der Muffe entspricht, darin,
daß am Übergang von der Muffe auf den restlichen Längenabschnitt des Metallrohrs zwei bis vier gleichmäßig über den Umfang der Muffe verteilt angeordnete Auswölbungen vorgesehen sind, deren Außendurchmesser etwa 10 mm größer ist als der Außendurchmesser des Metallrohrs.

Eine derartige Ausgestaltung erlaubt es, einen Rohrstrang entlang einer Hauswand rutschsicher zu verlegen, bei dem durch die Verwendung von Kupfer nicht nur dessen Beständigkeit, Wirtschaftlichkeit, ausgezeichneten Verarbeitungsmöglichkeit und seine Anpassung an andere Baustoffe zur Geltung kommt, sondern auch durch die aus einem gerundeten Kupferwalzmaterial und in Längsrichtung stumpfgeschweißten, somit innen wie außen völlig glatten Fallrohre eine einfache schnelle Montage und eine so gut wie kaum sichtbare Verbindung der Fallrohre erreicht wird.

Durch die erfindungsgemäße Festlegung der Fallrohre an der Hauswand über an sich bekannte Befestigungsschellen aufgrund der am Übergang von der Muffe auf das Metallrohr angeordneten umfangsseitig gleichmäßig verteilten zwei bis vier Auswölbungen ist eine sichere Lage bei ästhetischem Gesamteindruck gewährleistet.

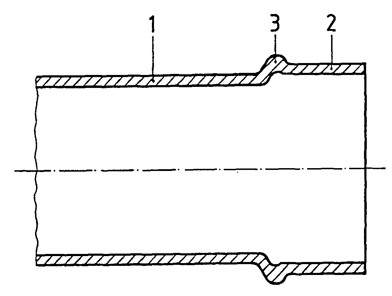

Die Erfindung ist nachfolgend anhand eines in der Zeichnung dargestellten Ausführungsbeispiels näher erläutert.

Dargestellt ist der eine Endabschnitt eines aus einem durch Biegen bzw. Rollformen eines Metallstreifens aus Kupfer mit anschließendem Stumpfschweißen der Längskanten des umformten Metallstreifens hergestellten zylindrischen Metallrohr 1 bestehenden Regenfallrohrs. Das Rohrende ist mit einer Muffe 2 versehen. Der Innendurchmesser der Muffe 2 ist geringfügig größer als der Außendurchmesser des Metallrohrs 1, um zwei Metallrohre 1 leicht ineinanderschieben zu können. Die Wanddicke des Metallrohrs 1 und auch der Muffe 2 beträgt 0,6 mm. Der Außendurchmesser des Metallrohrs 1 beträgt etwa 100 mm.

Am Übergang von der Muffe 2 auf das Metallrohr 1 sind zwei bis vier gleichmäßig über den Umfang verteilt angeordnete Auswölbungen 3 vorgesehen. Deren Außendurchmesser ist etwa 10 mm größer als der Außendurchmesser des Metallrohrs 1 bemessen.

Zur Befestigung des Metallrohrs 1 an einer Hauswand, beispielsweise mit einer Rohrschelle, reicht diese Auswölbungshöhe vollkommen aus. Mit den Auswölbungen 3 wird ein Durchrutschen des Metallrohrs 1 durch eine in der Figur nicht dargestellte Rohrschelle sicher verhindert. Die nur um die Wanddicke des Metallrohrs 1 herausgearbeitete Muffe 2 ist für die Befestigung der Rohrschelle allein nicht geeignet.

## Patentansprüche

1. Regenfallrohr aus einem durch Biegen bzw. Rollformen eines dünnen Metallstreifens aus Kupfer oder einer niedriglegierten Kupferlegierung mit anschließendem Stumpfschweißen der Längskanten des umgeformten Metallstreifens hergestellten zylindrischen Metallrohr (1), das an einem Ende eine zylindrische Muffe (2) zur Aufnahme des Endabschnitt eines weiteren Metallrohrs (1) besitzt und dessen Außendurchmesser im wesentlichen dem Innendurchmesser der Muffe (2) entspricht, dadurch gekennzeichnet,
daß am Übergang von der Muffe (2) auf den restlichen Längenabschnitt des Metallrohrs (1) zwei bis vier gleichmäßig über den Umfang der Muffe (2) verteilt angeordnete Auswölbungen (3) vorgesehen sind, deren Außendurchmesser etwa 10 mm größer ist als der Außendurchmesser des Metallrohrs (1).

## Claims

1. Rain downpipe consisting of a cylindrical metal pipe (1) which is manufactured by bending or roll-forming a thin metal strip of copper or of a low-alloyed copper alloy and then butt-welding the longitudinal edges of the formed metal strip, and which at one end has a cylindrical socket (2) to accommodate the end section of a further metal pipe (1) and whose outside diameter essentially corresponds to the inside diameter of the socket (2), characterised in that two to four convexities (3) distributed uniformly over the circumference of the socket (2) are provided at the transition from the socket (2) to the remaining portion of the length of the metal pipe (1) and whose outside diameter is roughly 10 mm greater than the outside diameter of the metal pipe (1).

## Revendications

1. Tuyau de descente d'eaux pluviales, constitué d'un tube métallique cylindrique (1) fabriqué par cintrage ou roulage d'une mince bande métallique en cuivre ou en un alliage de cuivre faiblement allié puis soudage bout à bout des arêtes longitudinales de la bande métallique mise en forme, dont une extrémité comprend un manchon cylindrique (2) pour recevoir le segment d'extrémité d'un autre tube métallique (1) et dont le diamètre extérieur correspond essentiellement au diamètre intérieur du manchon (2),
caractérisé en ce que
la transition du manchon (2) vers le segment de longueur, résiduel, du tube métallique (1) est assurée par deux à quatre bourrelets (3), répartis régulièrement à la périphérie du manchon (2) et dont le diamètre extérieur dépasse d'environ 10 mm le diamètre extérieur du tube métallique (1).
